# EUROPEAN PATENT APPLICATION

(11) **EP 1 507 081 A1**
(43) Date of publication of application: **16.02.2005**
(21) Application number: 03102502.6
(22) Date of filing: 12.08.2003
(51) Int. Cl.: F02M 25/08

(54) **Evaporated fuel processing device**

(71) Applicant: Delphi Technologies, Inc., Troy, MI 48007 (US)
(72) Inventor: LOEVENBRUCK, Remi, 6791, ATHUS (BE); HILLARD, Christian, 57525, TALANGE (FR); HISLAIRE, Ives, 6630, MARTELANGE (BE)
(74) Representative: Beissel, Jean

(57) **Abstract**

An evaporated fuel processing device comprises a canister (1) including a canister case (2) defining an absorbent chamber (3), which accommodates an adsorbent material to temporarily collect fuel vapors, a tank port (4) for connecting to a fuel tank, a purge port (5) for connecting to an intake passage of fuel consuming device, buffer means (6) defined by an extending element of said canister case (2), said extending element being in communication with the adsorbent chamber (3) and one of either tank or purge port (4,5) being arranged in said extending element. According to the invention, the buffer means (6) are at least partially filled with adsorbent material so as to define a minimum path length through adsorbent material for said fuel vapors drawn from the fuel tank during purge operation.

## Description

### Field of the invention

The present invention generally relates to an evaporated fuel processing device, in particular for an internal combustion engine of an automotive vehicle, comprising an evaporative canister.

### Background of the invention

There are three main sources of polluting gases from an internal combustion engine: engine exhaust, crankcase and fuel supply systems. In the fuel tank, the hydrocarbons that are continually evaporating from the fuel constitute a significant contributing factor to air pollution.

To control the air pollution resulting from these emissions, governments establish quality standards and perform inspections to ensure that standards are met. Standards have become progressively more stringent, and the equipment necessary to meet them has become more complex. Emissions from the fuel tank are reduced by an evaporated fuel processing device, the heart of which is an evaporative canister of activated carbon capable of holding fuel vapor entering the canister via a tank port. The evaporative canister acts as a storehouse. When the engine is running, the adsorbent is regenerated by purging the vapors from the evaporative canister through the purge port into the combustion chamber, where they are burnt. During this regeneration, fresh air enters the canister through an atmospheric port, usually situated on the opposite side of tank and purge ports.

A generally known problem with evaporative canisters is that at the beginning of the purge operation, the pressure drop between tank port and the purge port is lower then between purge port and atmospheric port. Fuel vapors coming directly from the tank are drawn to the engine and may cause the engine to temporary run in an undesirably rich air-fuel mixture, thereby disturbing the engine regulation loop. This phenomenon is generally referred to as cross-talk.

As the vacuum in the tank increases and reaches a certain level, fresh air is suck from the atmospheric port.

Two major approaches may be observed to cope with this drawback.

A first option is to obstruct temporarily the tank port to avoid any direct connection to the tank during purge operation. This can be done by shutting the tank inlet e.g. with valves. But as these additional parts must resist to high mechanical stress, manufacturing costs of the entire device increase.

Another possibility to solve this problem is to forcibly pass the fuel vapors from the tank through the adsorbent to prevent the vapors from being bypassed directly to the purge port. In other words, the aim is to suppress any shortcut between ports and to lengthen the path of incoming fuel vapors within the adsorbent. This can be achieved either by using baffle inserts or partition walls, or by using a so-called buffer tube, which is connected to the purge or tank port and penetrates within the adsorbent material.

A first shortcoming of this type of canisters is the fact that the whole adsorbent is not uniformly and effectively utilized for storing fuel vapors. Due to the layout of these canisters and physical limitations, such as the relatively slow diffusion of gases, some portions of the adsorbent are either badly desorbed during purge, or poorly charged with evaporated hydrocarbons, both phenomena reducing the overall efficiency of the device.

Buffer tubes usually have a plurality of through-holes to increase their efficiency. During the insertion of the adsorbent material into the canister, care must be taken not to damage the buffer tube and not to plug or block the holes.

As already outlined, a major disadvantage common to all these sol utions is a greater complexity of the assembly due to additional parts, like valves, buffer tubes, walls, inserts, etc. The filling of the canister with adsorbent material is also generally complicated by such a compound or multipart design. All these additional elements and assembly steps eventually result in higher manufacturing costs.

### Object of the invention

The object of the present invention is hence to provide an improved evaporated fuel processing device which effectively reduces cross-talk and which may be produced at lower costs.

This object is achieved by an evaporated fuel processing device as claimed in claim 1.

### Summary of the invention

The present invention proposes an evaporated fuel processing device, in particular for an internal combustion engine or fuel cell of an automotive vehicle, comprising a canister including a canister case defining an adsorbent chamber which accommodates an adsorbent material to temporarily collect fuel vapors, a tank port for connecting to a fuel tank, a purge port for connecting to an engine or fuel cell intake passage, and buffer means to avoid peaks of the too rich fuel/air mixtures during purge operation. The buffer means are defined by an extending element of said canister case, this extending element being in communication with the adsorbent chamber and one of either tank or purge port being arranged in said extending element. According to the present invention, these buffer means are at least partially filled with said adsorbent material so as to define a minimum path length through adsorbent material for said fuel vapors drawn from the fuel tank.

During purge operation, the fuel vapors entering through the tank port and drawn to the purge port must at least pass through the adsorbent within the buffer means. A device according to the invention thus efficiently reduces cross-talk by combining two positive effects. First, initial pressure drop between purge and tank port is increased and hence the fuel vapors are not as easily drawn from the tank. Second, fuel vapors are at least partially stripped off their volatile components before reaching the purge port.

The shape of the extending element is not critical, it may be short or elongated, depending on the chosen ratio between its height or length and its diameter.

This choice will be made with respect to the objectives sought in terms of efficiency and cost-effectiveness, as well as with respect to other constraints, such as possible space limitations e.g. within the engine compartment of a vehicle. Hence, the extending element will usually be straight, but may also be bent or coiled e.g. to reduce the overall length of the canister without reducing the effective or useful path length of the buffer means.

The cross section of said extending element may be of any shape, e.g. about round, rectangular or even irregular, a circular cross section being especially preferred. In a particularly preferred aspect of the invention, the extending element thus has a tubular shape, advantageously having the form of a straight cylindrical tube.

The size of its cross section size will usually be chosen to be substantially smaller than the cross section of said canister case. Advantageously, its cross section will be in the range of that of the port arranged thereon.

Although the respective position of both buffer means and remaining tank or purge port on the canister case is not limited by the present invention, a further embodiment proposes a device wherein said extending element and the other of tank or purge port, which is not arranged on the extending element, are located on the same surface of said canister case. This configuration is particularly desirable, because it reduces the overall bulkiness of the canister.

In a preferred embodiment, the extending element outwardly extends from said canister. In this case, part of the extending element may also reach within the adsorbent chamber, e.g. to allow an easier or better attachment to the case or to reduce overall length of the canister.

The extending element defining the buffer means may be a separately manufactured part fixed to the canister by any possible process, e.g. welding, screwing, clipping, squeezing or applying adhesive. An advantage of such a configuration is that buffer means of different sizes can be adapted to one type of canister case to meet different requirements. According to a preferred aspect of the invention, the extending element is preferably formed in one piece with said canister case, thereby significantly simplifying the assembly of the device compared to known solutions. This has also benefic effects on the manufacturing costs.

The packing of the canister with adsorbent material is also greatly simplified, if buffer means and adsorbent chamber are preferably arranged so that the filling of the adsorbent chamber with adsorbent material automatically and concomitantly fills said buffer means. No extra step is therefore required to produce a device of the present invention.

The purge port or the tank port may be provided on any one or more of the sides of the extending element except on the side connecting the element to the adsorbent chamber. But to maximize the path length and to avoid hardly accessible portions of adsorbent, said tank or purge port in the extending element is preferably diametrically opposed to said communication with the adsorbent chamber.

According to the present invention, two basic configurations are possible: either the purge port or the tank port, but never both, may be part of the extending element. In a preferred embodiment of the invention, the purge port is arranged in the extending element, which ensures the most efficient purging of the adsorbent.

The position of the extending element itself on the canister case usually will be chosen with respect to size and shape constraints determined by its use in the engine compartment of an automotive vehicle. Nevertheless, to optimize the efficiency of the device, it will usually be centrally located on one side of the canister case, e.g. essentially in the center of the top wall of the canister, especially if the port on the extending element is the purge port. A further advantage of such a canister will be a more uniform and hence more efficient use of the adsorbent material.

As mentioned above, a preferred aspect of the invention is the concomitant filling with adsorbent material of both adsorbent chamber and extending element. To this purpose, the device may comprise filter means applied to said tank port and/or purge port and/or atmospheric port to retain said adsorbent material inside the evaporative canister, especially during filling. These filter means may also prevent foreign material entering into the canister after its installation, e.g. dust particles through the atmospheric port.

The filter means on purge, tank and/or atmospheric port can be chosen independently from a large group of filters, such as filters of paper and synthetic materials, foams, perforated plates, screens, wire meshes and combinations of one or more thereof. It will be appreciated, that depending on the embodiment of the filter, the filter may also act as a compensator means. It will further be appreciated, that the present invention allows the use of different filter means for the purge port and the tank port.

The adsorbent material may comprise any material or mixtures of different materials with sufficiently high specific surface area capable of adsorbing volatile hydrocarbons and optionally other additives or stabilizers. A preferred adsorbent material according to the present invention is activated carbon, which may be used in any convenient form, such as powders, granules or pellets.

To prevent fuel vapors from passing to easily around loose adsorbent particles, it is desirable to provide and to keep the adsorbent in a relatively packed state. Accordingly, in a further embodiment of the invention, the device comprises volume compensator means to maintain the adsorbent material in a compacted state. These volume compensator means are generally fluidly arranged on one side of the adsorbent chamber and may include compacting plates and resilient elements, like springs. Although their position in the adsorbent chamber is not critical, a preferred arrangement is to provide them on the side of the adsorbent chamber diametrically opposed to buffer means or purge port to get maximum efficiency.

The device of the invention preferably also comprises cover means to introduce the adsorbent material and other parts, like volume compensator means, into the canister case. The cover is desirably located on the same side as the volume compensator means, e.g. diametrically opposed to said buffer means. The cover may be sealed during assembly of the device or be removable to facilitate recycling or refilling of the canister.

A canister according to the invention usually also comprises an atmospheric port. To maximize regeneration efficiency, such an atmospheric port is best situated on a side of the canister case diametrically opposed to said buffer means or to said purge port. According to a preferred embodiment of the invention, the atmospheric port is integrated in said cover means. It will be noted that the expression diametrically opposed has to be understood in relation to the flow path of the vapor within the canister.

In the case where the volume compensator means are placed between the atmospheric port and the purge port, they must be permeable to gases. This will generally be achieved by using volume compensator means with perforated plates or screens.

The purge port may be connected to the intake passage of a fuel consuming device, usually to the combustion chamber of an internal combustion engine or to a cell of a fuel cell system. Although the present invention also encompasses the use of the evaporated fuel processing device in stationary installations, the main need for such devices is in the automobile industry. Therefore, another aspect of the invention is the use of an evaporated fuel processing device as described above in an automotive vehicle, especially in hybrid or non-hybrid vehicles with an internal combustion engine or in vehicles using a fuel cell system.

In a further embodiment of the present invention, the device comprises an evaporative canister including a canister case defining an adsorbent chamber which accommodates the adsorbent material, a first end wall integrating a tank port and buffer means defined by an extending element including a purge port, and a second end wall, opposite to said first end wall, integrating an atmospheric port. The second end wall acts as a cover, which can be removable or sealed after the filling of the canister. Both purge port and tank port are provided with filter means, such as a foam or a screen. The filling of the canister can be done by turning it upside down and by introducing the adsorbent through the cover side, thereby concomitantly filling the adsorbent into the buffer means and into the adsorbent chamber. Volume compensator means may then be introduced into the canister case before placing the cover.

### Detailed description with respect to the figures

The present invention will be more apparent from the following description of a non-limiting embodiment with reference to the attached drawings, wherein
- Fig.1:: is a section view of a preferred embodiment of a canister according to the invention.
- Fig.2:: is a section view of a part of an embodiment of a canister according to the invention, showing buffer means and purge and tank ports.

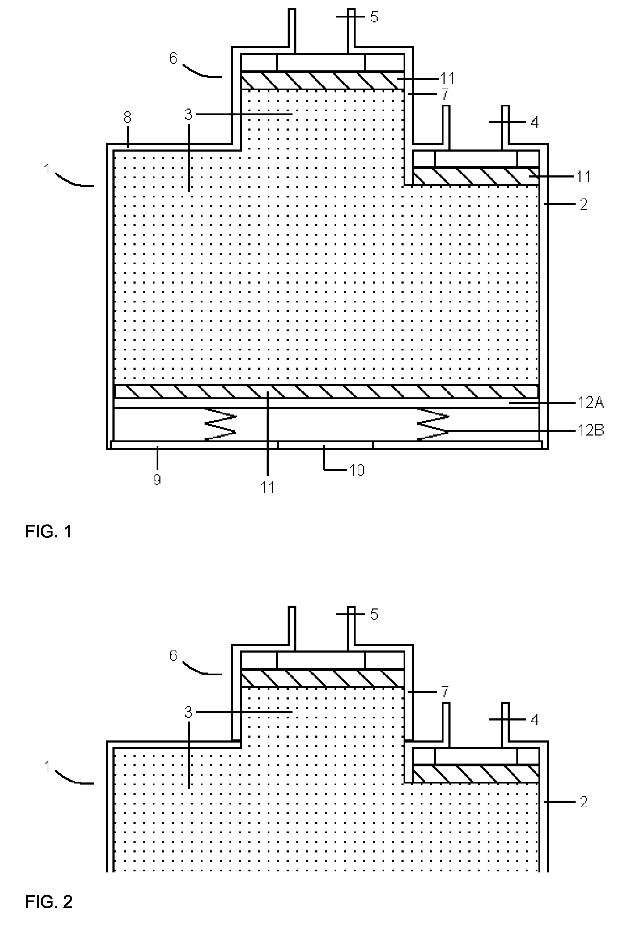

Fig. 1 represents an evaporated fuel processing device according to a preferred embodiment which comprises a canister (1) including a canister case (2) defining an adsorbent chamber (3), a first end wall (8) integrating both a tank port (4) connected to a fuel tank, and buffer means (6) defined by an outwardly extending element (7) whose distal end is provided with a purge port (5) connected to an engine intake passage. The buffer means have the general shape of a tube formed in one piece with the case. A second end wall (9), opposite to the first end wall, integrates an atmospheric port (10) to draw fresh air during purge. Filters (11) are applied to said tank port (4) and purge port (5) to retain the adsorbent within the canister. A volume compensator, comprising e.g. a compacting plate (12A) and springs (12B), keeps the adsorbent in a relatively compacted state. This volume compensator is permeable to gases (e.g. comprising through-holes not represented in Fig. 1) and is located close to the second end wall (9). Filters (13) are arranged on the volume compensator means to prevent foreign particles from entering the adsorbent material via the atmospheric port (10).

In such a canister, both buffer means (6) and adsorbent chamber (3) accommodate the adsorbent material to temporarily collect fuel vapors. The second end wall (9) acts as a cover to concomitantly fill the buffer means and the adsorbent chamber with said adsorbent material and to subsequently introduce the volume compensator. This filling step of the canister may be done simply by turning it upside down and by introducing the adsorbent and then the volume compensator. The case is then closed with the either sealed or removable cover.

The adsorbent material temporarily collects fuel vapors entering the device through the tank port. During purge operation, e.g. when the engine is running, the fuel vapors are forcibly passed at least through the adsorbent material in the buffer means to efficiently reduce cross-talk.

In Fig. 2, where same numerals as in Fig. 1 refer to the same features of another embodiment, an evaporated fuel processing device comprises separately manufactured buffer means (6) that may be attached to the case by any means, e.g. by welding the part on the canister. An advantage of this is that buffer means of different sizes can be adapted to one type of canister case to meet different requirements.

The purge port (5) is preferably provided in the buffer means (6) (configuration as represented in Fig. 2). Another possible configuration is obtained if tank port (4) and purge port (5) are substituted one for another (configuration not represented in Fig. 2).

## Claims

1. Evaporated fuel processing device comprising a canister including:
• a canister case defining an adsorbent chamber, which accommodates an adsorbent material to temporarily collect fuel vapors,
• a tank port for connecting to a fuel tank,
• a purge port for connecting to an intake passage of a fuel consuming device,
• buffer means defined by an extending element of said canister case, said extending element being in communication with the adsorbent chamber and one of either tank or purge port being arranged in said extending element,
**characterized in that**
said buffer means are at least partially filled with adsorbent material so as to define a minimum path length through adsorbent material for fuel vapors drawn from the fuel tank.

2. Evaporated fuel processing device according to claim 1, wherein said extending element has a tubular shape.

3. Evaporated fuel processing device according to claim 1 or 2, wherein the cross section of said extending element is substantially smaller than the cross section of said canister case.

4. Evaporated fuel processing device according to any of the preceding claims, wherein the other of tank or purge port and said extending element are located on the same surface of said canister case.

5. Evaporated fuel processing device according to any of the preceding claims, wherein said extending element outwardly extends from said canister case.

6. Evaporated fuel processing device according to any of the preceding claims, wherein said buffer means are formed in one piece with said canister case.

7. Evaporated fuel processing device according to any of the preceding claims, wherein buffer means and adsorbent chamber are arranged so that the filling of the adsorbent chamber with adsorbent material concomitantly fills said buffer means.

8. Evaporated fuel processing device to any of the preceding claims, wherein said tank or purge port in said extending element is diametrically opposed to said communication with the adsorbent chamber.

9. Evaporated fuel processing device according to any of the preceding claims, wherein said purge port is arranged in said extending element.

10. Evaporated fuel processing device according to any of the preceding claims, further comprising an atmospheric port diametrically opposed to said buffer means.

11. Evaporated fuel processing device according to any of the preceding claims, further comprising filter means, wherein said filter means are applied to said tank port and/or purge port and/or atmospheric port to retain said adsorbent material inside the evaporative canister and/or to prevent foreign material entering therein.

12. Evaporated fuel processing device according to claim 11, wherein said filter means on purge port, tank port and/or atmospheric port are chosen independently from the group comprising paper filters, foams, perforated plates, screens, wire meshes and combinations thereof.

13. Evaporated fuel processing device according to any of the preceding claims, wherein said adsorbent material comprises activated carbon.

14. Evaporated fuel processing device according to any of the preceding claims, further comprising volume compensator means to maintain the adsorbent material in a compacted state.

15. Evaporated fuel processing device according to claim 14, wherein said volume compensator means are diametrically opposed to said buffer means.

16. Evaporated fuel processing device according to any of the preceding claims, further comprising cover means provided on the canister case, diametrically opposed to said buffer means and integrating said atmospheric port.

17. Use of an evaporated fuel processing device according to any of claims 1 to 16 in an automotive vehicle.
